# EUROPÄISCHE PATENTSCHRIFT

(11) **EP 0 896 445 B1**
(45) Veröffentlichungstag und Bekanntmachung des Hinweises auf die Patenterteilung: **19.10.2005**
(21) Anmeldenummer: 98440166.1
(22) Anmeldetag: 31.07.1998
(51) Int. Cl.: H04B 10/158

(54) **Vorrichtung zum Entzerren eines aufgrund von Störungen im optischen Bereich verzerrten elektrischen Signals**
Apparatus for correction of optical signals distorted by optical interference
Dispositif pour corriger un signal optique déformé par l'interférence optique

(30) Priorität: 05.08.1997 DE 19733764
(43) Veröffentlichungstag der Anmeldung: 10.02.1999
(73) Patentinhaber: ALCATEL, 75008 Paris (FR)
(72) Erfinder: Bülow, Henning, Dr., 70597 Stuttgart (DE)
(74) Vertreter: Schätzle, Albin

(56) Entgegenhaltungen:
- CA-A- 2 130 157
- US-A- 3 868 576
- WINTERS J H ET AL: "EXPERIMENTAL EQUALIZATION OF POLARIZATION DISPERSION" IEEE PHOTONICS TECHNOLOGY LETTERS, IEEE INC. NEW YORK, US, Bd. 2, Nr. 8, 1. August 1990 (1990-08-01), Seiten 591-593, XP000149738 ISSN: 1041-1135
- TAKAHASHI T ET AL: "AUTOMATIC COMPENSATION TECHNIQUE FOR TIMEWISE FLUCTUATING POLARISATION MODE DISPERSION IN IN-LINE AMPLIFER SYSTEMS" ELECTRONICS LETTERS, IEE STEVENAGE, GB, Bd. 30, Nr. 4, 17. Februar 1994 (1994-02-17), Seiten 348-349, XP000439537 ISSN: 0013-5194
- BUELOW H: "EQUALIZATION OF BIT DISTORTION INDUCED BY POLARIZATION MODE DISPERSION" CORE AND ATM NETWORKS. NOC, XX, XX, 17. Juni 1997 (1997-06-17), Seiten 65-72, XP001004888
- WINTERS J H: "EQUALIZATION IN COHERENT LIGHTWAVE SYSTEMS USING A FRACTIONALLY SPACED EQUALIZER" JOURNAL OF LIGHTWAVE TECHNOLOGY, IEEE. NEW YORK, US, Bd. 8, Nr. 10, 1. Oktober 1990 (1990-10-01), Seiten 1487-1491, XP000171568 ISSN: 0733-8724
- WINTERS J H ET AL: "ELECTRICAL SIGNAL PROCESSING TECHNIQUES IN LONG-HAUL FIBER-OPTIC SYSTEMS" IEEE TRANSACTIONS ON COMMUNICATIONS, IEEE INC. NEW YORK, US, Bd. 38, Nr. 9, 1. September 1990 (1990-09-01), Seiten 1439-1453, XP000173216 ISSN: 0090-6778

## Beschreibung

Die Erfindung betrifft eine elektrische Entzerrervorrichtung für ein aus einem über Lichtleiter übertragenen optischen Signal gewonnenes elektrisches Eingangssignal, welches durch Störungen im optischen Signal verzerrt ist, mit einem elektronischen Entzerrer.

Eine derartige elektrische Entzerrervorrichtung ist zum Beispiel aus der Veröffentlichung von J. Winters et al., "Electrical Signal Processing Techniques in Long-Haul Fiber-Optic Systems", IEEE Transactions on Communications, Vol.38 (Nr.9), 1990, Seiten 1439 bis 1453, bekanntgeworden.

Die Druckschrift CA 2 130 157 A1 beschreibt ein adaptives Diversity-Filter, das geeignet ist, Funksignale in einem Mobilfunknetz, die aufgrund von Mehrwegeausbreitung verzerrt sind, elektrisch zu entzerren. Das Diversity-Filter besitzt einen linearen Filter und ein entscheidungsrückgekoppeltes Filter (decision feedback equalizer DFE). Die Filter sind parallelgeschaltet und ihre Filterparameter werden anhand von Kanalschatzungen eingestellt. Über einen Auswahlschalter kann das bessere der beiden Filterausgangssignale ausgewählt werden.

Der Artikel "Experimental Equalization of Potarization Dispersion" von J. H. Winters, IEEE Photonics Technology Letters, 1. August 1990, Seiten 591-593, beschreibt einen experimentellen Aufbau zur Demonstration einer elektrischen Entzerrung von Signalen, die durch Polarisationsmoden-Dispersion im optischen Bereich verzerrt sind. Der experimentelle Aufbau verwendet eine polarisationserhaltende Faser um PMD-Verzerrung zu simulieren und enthält einen manuell einstellbaren linearen Filter in Form einer analogen Tapped Delay-Line. Der Artikel erwähnt, dass die Verwendung eines linearen Filters auf Anwendungen beschränkt ist, bei denen das Augendiagramm noch nicht vollständig geschlossen ist, während nicht-lineare Filter wie ein Decision Feedback Equalizer (DFE) oder ein nonlinear Canceler (NLC) geeignet wären PMD-Verzerrungen jeglicher Stärke auszugleichen. Der Artikel nennt auch die Notwendigkeit, dass Filter bei realen Anwendungen in Systemen, die mit Singlemode-Fasern arbeiten, adaptiv sein müssen.

Die in Monomodefasern auftretende Polarisationsmoden-Dispersion (PMD) äußert sich in einer Zwei-Wege-Ausbreitung eines optischen Signals. Zeigt eine Faser Doppelbrechung, also unterschiedliche Ausbreitungsbedingungen für die beiden orthogonalen Polarisationsrichtungen (optische Hauptachsen), so kommt es zu einer Aufspaltung des Fasergrundmodus in zwei senkrecht zueinander polarisierte Moden. Entlang dieser beiden optischen Hauptachsen der Faser breitet sich das optische Signal unterschiedlich schnell aus, d.h., es kommt zu einem "schnellen" und einem "langsamen" Signalanteil. Die PMD läßt sich als Funktion zweier Größen ausreichend charakterisieren, z.B. durch den Zeitunterschied Δτ zwischen dem "schnellen" und dem "langsamen" Signalanteil und durch die relative Leistung γ in einer Hauptachse. Im Zusammenhang mit höchstbitratiger optischer Übertragung auf Glasfasern (> 2,5 Gb/s) kann PMD als die Übertragungsrate begrenzende Eigenschaft (maximale Übertragungsstrecke) auftreten.

Aus der Veröffentlichung von T. Takahashi et al., "Automatic compensation technique for timewise fluctuating polarisation mode dispersion in in-line amplifier systems", Electronics Letters, Vol.30 (Nr.4), 1994, Seiten 348/349, ist es bekannt, zur Kompensation der durch PMD hervorgerufenen Signalverzerrungen in der optischen Ebene adaptiv, der PMD folgend, eine entgegengesetzte Doppelbrechung in den optischen Signalweg einzufügen und damit die Verzerrung zu reduzieren. Dazu werden in der optischen Ebene eine Polarisations-Steuereinheit und eine optische Verzögerungsstrecke in den optischen Signalweg vor dem optischen Empfänger eingefügt.

Aus den eingangs genannten Veröffentlichungen von J. Winters et al. ist eine PMD-Kompensation in der elektrischen Ebene bekannt. Dazu ist in einem optischen Empfänger nach seiner Empfangsdiode ein linearer elektronischer Entzerrer vorgesehen, um lineare Verzerrungen zu kompensieren. Als elektronischer Entzerrer wird ein elektronischer Filter mit N Anzapfungen (taps) als verzweigende Verzögerungsstrecke verwendet. Dabei sind sowohl Transversalfilter als auch rückgekoppelte Entscheider (decision feedback equalization (DFE)) vorgeschlagen, deren Parameter adaptiv jeweils der zeitlich fluktuierenden PMD nachgeführt werden.

Da die PMD zeitlich nicht konstant ist, müßte in der optischen Ebene eine Anpassung der Verzögerungsstrecke an die zeitlich variierende PMD erfolgen, was praktisch nur mit sehr hohem Aufwand möglich ist. In der elektrischen Ebene besteht das Problem darin, daß mit einem Transversalfilter z.B. eine Kompensation für γ=0,5 nicht möglich ist, wobei γ das relative Verhältnis der Leistungen in den beiden Polarisationszuständen ist. Ein DFE wiederum erlaubt keine Entzerrung bei kleinem γ. Da bei einem elektronischen Entzerrer viele Entzerrungsparameter unabhängig voneinander einzustellen sind, erfordert das Auffinden der bestmöglichen Entzerrung eines aufgrund von PMD verzerrten elektrischen Eingangssignals einen komplizierten und zeitaufwendigen Optimierungsalgorithmus.

Es ist daher Aufgabe der vorliegenden Erfindung, ein optischer Empfänger mit einer verbesserten elektrischen Entzerrervorrichtung zu schaffen.

Der optische Empfänger ist erfindungsgemäß gekennzeichnet durch die Merkmale des Anspruchs 1.

Bei dieser erfindungsgemäß aus mehreren Entzerrern bestehenden Entzerrervorrichtung kann zwischen unterschiedlichen Entzerrern der gerade zufriedenstellend arbeitende herausgeschaltet werden. Wenn bereits vorab eindeutig jedem Entzerrer ein gewisser Störungsparameterbereich zugeordnet ist, in welchem er erfahrungsgemäß zufriedenstellend arbeitet, kann allein anhand der bestimmten Störungsparameter der entsprechende Entzerrer ausgewählt werden. Diese Ausführungsform hat den wesentlichen Vorteil, daß der gesamte Bereich der auf Störungen beruhenden Verzerrungen mit solchen Entzerren, die jeweils in ihren, über die Störungsparameter vorbestimmten Entzerrerbereichen optimal entzerren, optimal abgedeckt werden kann. Die Steuereinheit optimiert die Signalgüte (Gütekriterium), verfolgt die Verzerrung (tracking) und bestimmt über die jeweiligen Störungsparameter die optimalen Entzerrungsparameter des jeweils ausgewählten Entzerrers. Als elektronische Entzerrer können lineare Filter (Transversalfilter) oder rückgekoppelte Entscheider (decision-feedback equalization (DFE)) eingesetzt werden. Mit der erfindungsgemäßen Entzerrervorrichtung läßt sich die maximale Übertragungsstrecke von Lichtleitern erheblich, z.B. auf das Zehnfache, steigern.

Ein Vorteil der Erfindung besteht darin, daß sie sowohl bei Polarisationsmoden-Dispersion als auch alternativ oder gleichzeitig auch für die Kompensation von Verzerrungen eingesetzt werden kann, die durch andere Störungen wie Selbstphasenmodulation (SPM), chromatische Faserdispersion oder schwankende Bauelementeparameter z.B. des Senders hervorgerufen werden.

Bei einer besonders bevorzugten Ausführungsform umfaßt die Steuereinheit eine Auswahleinrichtung, die das entzerrte Ausgangssignal des ausgewählten elektronischen Entzerrers zur Ausgabe als Datensignal auswählt. Die Auswahleinrichtung kann z.B. entweder ein ansteuerbarer elektronischer Schalter sein, der jeweils die gewünschte Entzerrerleitung als Datensignal durchschaltet, oder der jeweils nur denjenigen Entzerrer mit der bestmöglichen Entzerrung aktiviert.

Um die Entzerrungsparameter entsprechend dem entzerrten Ausgangssignal fortlaufend anpassen zu können, ist der Steuereinheit das entzerrte Ausgangssignal des ausgewählten elektronischen Entzerrers zur Steuerung seines Satzes von Entzerrungsparametern zugeführt.

Damit beim Umschalten zwischen zwei elektronischen Entzerrern keine BitVerluste oder Bit-Verdoppelungen auftreten, ist vorzugsweise jedem elektronischen Entzerrer ein variables Verzögerungsglied zugeordnet, dessen Verzögerung jeweils von der Steuereinheit gesteuert wird. Die zum Umschalten zwischen zwei Entzerrern erforderliche Verzögerung kann ebenfalls bereits vorab in Abhängigkeit der Störungsparameter festgelegt sein. Das variable Verzögerungsglied kann digital z.B. als Schieberegister mit variabler Länge (shift register of variable length) oder mit variablem Schieberegistertakt (variable delayed shift register clock) ausgebildet sein. Alternativ kann das variable Verzögerungsglied auch aus hinreichend fein gestuften Leitungen unterschiedlicher Länge bestehen, die zu- oder weggeschaltet werden.

Diese Verzögerungsglieder können vor oder nach den ihnen zugeordneten elektronischen Entzerrern vorgesehen sein. Bevorzugt sind sie jedoch ihren jeweiligen elektronischen Entzerrern vorgeschaltet, wodurch sich Vorteile bei der Taktrückgewinnung aus dem verzerrten Eingangssignal ergeben, da dann keine durch die elektronischen Entzerrer zusätzlich verursachten Verzögerungen zu berücksichtigen sind.

Bei bevorzugten Ausführungsformen weist die Steuereinheit eine Signalüberwachung zum Bestimmen und Verfolgen der Signalgüte des elektrischen Ausgangssignals auf.

Bei bevorzugten Ausführungsformen der Erfindung weist die Steuereinheit eine Einrichtung zur Variation des für ein optimal entzerrtes Ausgangssignal aufgefundenen Satzes von Entzerrungsparametern auf, um so bei einer zeitlich variierenden Verzerrung des elektrischen Eingangssignals die Entzerrungsparameter entsprechend nachregeln zu können.

Zum Auffinden der bestmöglichen Entzerrung eines aufgrund PMD verzerrten elektrischen Signals wird die Signalgüte des entzerrten Ausgangssignals bestimmt, wird mindestens ein Satz von Entzerrungsparametern als Funktion von mindestens zwei zunächst willkürlich angenommenen Störungsparametern, welche die der Verzerrung zugrundeliegende Störung im optischen Signal charakterisieren, bestimmt, wobei die Anzahl der Störungsparameter geringer als die Anzahl der Entzerrungsparameter des mindestens einen Satzes ist, und werden dann die Störungsparameter und damit die Entzerrungsparameter des mindestens einen Satzes solange variiert, bis die Signalgüte des entzerrten Ausgangssignals jeweils optimiert ist. Dabei kann die Bestimmung der Signalgüte des entzerrten Ausgangssignales und des mindestens eine Satzes von Entzerrungsparametern fortwährend oder periodisch nach vorbestimmten Zeitabschnitten durchgeführt werden.

Indem jeder Entzerrungsparametersatz für einen elektronischen Entzerrer eindeutig einem Störungsparameterpaar vorab zugeordnet ist oder sich eindeutig aus einem solchen Störungsparameterpaar berechnen läßt, lassen sich allein durch Variation der wenigen Störungsparameter die zugehörigen mehreren Entzerrungsparameter eines Satzes bestimmen. Anstatt bei einem elektronischen Entzerrer jeweils alle seine Entzerrungsparameter entsprechend der Signalgüte des entzerrten Ausgangssignals anpassen zu müssen, kann durch Reduktion auf nur wenige Störungsparameter die Variation erleichtert und beschleunigt werden. Die bestmögliche Entzerrung des verzerrten Eingangssignals ergibt sich dann, wenn die Signalgüte des elektrischen Ausgangssignals optimiert ist, z.B. wenn die Fehlerrate des Ausgangssignals minimalioder die Augenöffnung des Ausgangssignals maximal ist.

Eine durch Polarisationsmoden-Dispersion (PMD) hervorgerufene Störung kann vorteilhaft auch durch nur zwei Störungsparameter (PMD-Parameter), Δτ und γ, charakterisiert, wobei Δτ die bei der Übertragung des optischen Signals entlang den beiden optischen Hauptachsen des Lichtleiters auftretende Zeitdifferenz (differential group delay) und γ die relative Leistung des, z.B. schnelleren, Signalanteils in der optischen Hauptachse des Lichtleiters (relative power) ist. Die PMD läßt sich theoretisch bzw. in ausreichendem Maße durch diese zwei Größen charakterisieren.

Wenn die für ein optimal entzerrtes Ausgangssignal aufgefundenen Entzerrungsparameter des mindestens einen Satzes weiterhin fortwährend oder periodisch nach vorbestimmten Zeitabschnitten variiert werden, lassen sie sich einer zeitlich variierenden Verzerrung des elektrischen Eingangssignals nachregeln. Es ist auch möglich, eine Nachregelung immer dann vorzunehmen, wenn die Signalgüte des Ausgangssignals, z.B. charakterisiert durch die Augenöffnung oder die Bitfehlerrate, unter einen vorbestimmten Schwellenwert abgesunken ist.

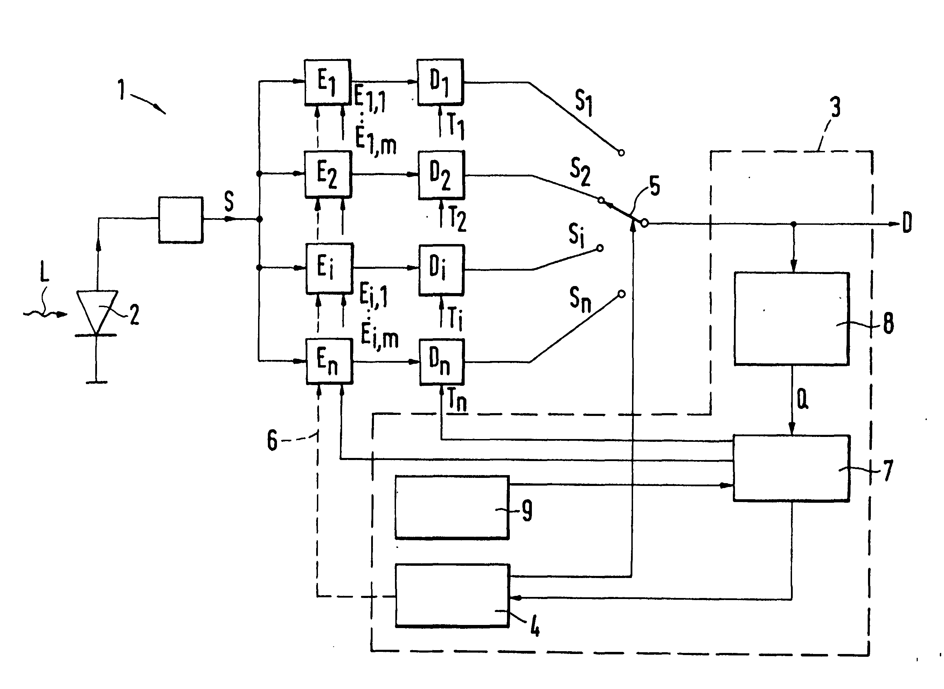

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigte und beschriebene Ausführungsformen ist nicht als abschließende Aufzählung zu verstehen, sondern hat vielmehr beispielhaften Charakter für die Schilderung der Erfindung.

In der einzigen Figur ist ein Funktionsschema eines optischen Empfängers mit einer erfindungsgemäßen elektrischen Entzerrervorrichtung dargestellt, auf das auch das erfindungsgemäße Verfahren angewendet werden kann.

In dem in der Figur insgesamt mit 1 bezeichneten optischen Empfänger wird ein über Lichtleiter übertragenes Lichtsignal L mittels einer als Empfangsdiode ausgebildeten Empfangseinrichtung 2 in ein elektrisches Eingangssignal S gewandelt, welches durch Störungen im optischen Signal aufgrund von Polarisationsmoden-Dispersion verzerrt ist.

Zur Entzerrung wird das elektrische Eingangssignal S jeweils n (n > 1) parallel geschalteten unterschiedlichen, variablen elektronischen Entzerrern E₁,..,Eᵢ,..,Eₙ einer elektrischen Entzerrervorrichtung zugeführt, wobei jedem elektronischen Entzerrer E₁,..,Eᵢ,..,Eₙ ein variables Verzögerungsglied D₁,..,Dᵢ,..,Dₙ nachgeschaltet ist. Von den entzerrten elektrischen Ausgangssignalen S₁,..,Sᵢ,..,Sₙ aller elektronischer Entzerrern E₁,..,Eᵢ,..,Eₙ wird dasjenige mit der bestmöglichen Entzerrung als Datensignal D ausgegeben.

Da die entzerrten Signale S₁,..,Sᵢ,..,Sₙ an den Ausgängen der unterschiedlichen elektronischen Entzerrer E₁,...,Eₙ unterschiedliche zeitliche Verzögerungen besitzen, werden beim Umschalten zwischen zwei Entzerrern ansonsten auftretende Bitverluste oder Bitverdoppelungen durch entsprechend eingestellte Verzögerungen T₁,..,Tᵢ,..,Tₙ an den Verzögerungsgliedern D₁,..,Dᵢ,..,Dₙ vermieden.

Die Auswahl des bestentzerrenden Entzerrers Eᵢ, das Auffinden der bestmöglichen Einstellung seiner m Entzerrungsparameter E_{i,1},..,E_{i,m} (i=1,..,n) sowie das Einstellen der Verzögerungen T₁,..,Tᵢ,..,Tₙ wird von einer Steuereinheit 3 vorgenommen, die diese Parameter jeweils optimal an die gerade aktuelle Verzerrung, d.h. an die dieser zugrundeliegende PMD-Störung anpaßt.

Dazu umfaßt die Steuereinheit 3 eine Auswahleinrichtung 4, die mittels eines elektrisch ansteuerbaren Schalters 5 das gewünschte entzerrte Ausgangssignal Si zur Ausgabe als Datensignal D schaltet. Alternativ kann die Auswahleinrichtung 4 auch nur denjenigen Entzerrer Eᵢ mit der gerade optimalen Entzerrung über ein entsprechendes Auswahlsignal aktivieren, wie es in der Figur über die strichpunktiert dargestellte Auswahlleitung 6 schematisch angedeutet ist.

Die jeweiligen Entzerrungsparameter E_{i,1},..,E_{i,m} und Verzögerungen Tᵢ werden mittels einer Ansteuerlogik 7 (PMD Observer) bestimmt und dem Entzerrer Eᵢ bzw. Verzögerungsglied Dᵢ zugeführt. Das als Datensignal D ausgegebene Ausgangssignal Sᵢ wird einer Signalüberwachung 8 (eye pattern observer) der Steuereinheit 3 zugeführt, mit der die Signalgüte Q des elektrischen Ausgangssignal Sᵢ anhand z.B. seiner Augenöffnung (eye opening) oder seiner Bitfehlerrate bestimmt wird. Die Steuereinheit 3 variiert mittels einer Variationseinrichtung 9 die Entzerrungsparameter E_{i,1},..,E_{i,m}, um der Signalüberwachung 8 das Verfolgen der Signalgüte Q bzw. der ihr zugrundeliegenden PMD zu ermöglichen bzw. zu erleichtern. Die Entzerrungsparameter E_{i,1},..,E_{i,m} werden nun solange variiert, bis die Signalgüte Q des entzerrten Ausgangssignals Si optimiert ist.

Um die für ein optimal entzerrtes Ausgangssignal Si aufgefundenen Entzerrungsparameter E_{i,1},...,E_{i,m} einer zeitlich variierenden Verzerrung des elektrischen Eingangssignals S nachregeln zu können, werden die Entzerrungsparameter E_{i,1},..,E_{i,m} auch weiterhin über die Variationseinrichtung 9 etwas variiert und bei Bedarf in Richtung einer optimalen Signalgüte Q nachgeführt.

Zum Auffinden der bestmöglichen Entzerrung werden in der Ansteuerlogik 7 die mehreren Entzerrungsparameter E_{i,1},...,E_{i,m} des ausgewählten Entzerrers Eᵢ als Funktion von nur zwei zunächst willkürlich angenommenen PMD-Parametern Δτ und γ, die die der Verzerrung zugrundeliegende PMD ausreichend charakterisieren, bestimmt. Dabei ist Δτ die bei der Übertragung des optischen Signals L entlang den beiden optischen Hauptachsen des Lichtleiters auftretende Zeitdifferenz und γ die relative Leistung in einer optischen Hauptachse des Lichtleiters. Die jeweiligen Entzerrungsparameter E_{i,1},..,E_{i,m} und Verzögerung Tᵢ lassen sich anhand von bekannten Kennlinien oder Tabellen aufgrund des die PMD repräsentierenden PMD-Parameterpaars (Δτ, γ) bestimmen. Über die Ansteuerlogik 7 wird entsprechend dem aufgefunden PMD-Parameterpaar (Δτ, γ) der für dieses Parameterpaar bestentzerrende Entzerrer E₁,...,Eₙ durch entsprechendes Ansteuern des Schalters 5 durch die Auswahleinrichtung 4 sowie seine Entzerrungsparameter und Verzögerung ausgewählt.

In dem Ausführungsbeispiel wurde nur die Kompensation von Verzerrungen, die durch Polarisationsmoden-Dispersion auftreten, besprochen. Die Erfindung kann jedoch auch eingesetzt werden, um Verzerrungen, die durch andere Störungen wie Selbstphasenmodulation (SPM), chromatische Faserdispersion oder schwankende Bauelementeparameter z.B. des Senders hervorgerufen werden, zu kompensieren. Dazu wird die Störung durch jeweils entsprechende Störungsparameter charakterisiert.

## Patentansprüche

1. Optischer Empfänger (1) mit
- einer Empfangseinrichtung (2) zum Wandeln eines über Lichtleiter übertragenen optischen Signals (L) in ein elektrisches Eingangssignal (S), welches durch Störungen im optischen Signal (L) verzerrt ist und
- einer elektrischen Entzerrervorrichtung für das Eingangssignal (S) mit mindestens zwei parallel geschalteten unterschiedlichen, variablen elektronischen Entzerrern (E1,..,Ei,..,En), denen das elektrische Eingangssignal (S) jeweils zugeführt wird, und mit einer Steuereinheit (3) zur Auswahl des elektrischen Ausgangssignals (S2) des jeweils bestentzerrenden elektronischen Entzerrers (E2) und zur Steuerung seiner Entzerrungsparameter (Ei,1,...,Ei,m) derart, dass die Signalgüte (Q) seines entzerrten Signals (S1-Sn) optimiert ist.

2. Optischer Empfänger nach Anspruch 1, bei dem die Steuereinheit (3) eine Auswahleinrichtung (4) umfaßt, die das entzerrte Ausgangssignal (Sᵢ) des ausgewählten elektronischen Entzerrers (Eᵢ) zur Ausgabe als Datensignal (D) auswählt.

3. Optischer Empfänger nach Anspruch 1, bei dem der Steuereinheit (3) das entzerrte Ausgangssignal (Sᵢ) des ausgewählten elektronischen Entzerrers (Eᵢ) zur Steuerung seines Satzes von Entzerrungsparametern (E_{i,1},..., E_{i,m}) zugeführt ist.

4. Optischer Empfänger nach Anspruch 1, bei dem jedem elektronischen Entzerrer (E₁,..,Eᵢ,..,Eₙ) ein variables Verzögerungsglied (D₁,..,Dᵢ,..,Dₙ) zugeordnet ist, dessen Verzögerung (T₁,..,Tᵢ,..,Tₙ) jeweils von der Steuereinheit (3) gesteuert wird.

5. Optischer Empfänger nach Anspruch 4, bei dem die Verzögerungsglieder (D₁,..,Dᵢ,..,Dₙ) ihren jeweiligen elektronischen Entzerrern (E₁,..,Eᵢ,..,Eₙ) vorgeschaltet sind.

6. Optischer Empfänger nach einem der Ansprüche 1, bei dem die Steuereinheit (3) eine Signalüberwachung (8) zum Bestimmen der Signalgüte (Q) des elektrischen Ausgangssignals (Sᵢ) aufweist.

7. Optischer Empfänger nach einem derAnsprüche 1, bei dem die Steuereinheit (3) eine Einrichtung (9) zur Variation des für ein optimal entzerrtes Ausgangssignal (Si) aufgefundenen Satzes (i) von Entzerrungsparametern (E_{i,1},...,E_{i,m}) aufweist.

## Claims

1. Optical receiver (1) with
- a receiving facility (2) for converting an optical signal (L) transmitted over optical fibre into an electrical input signal (S), which is distorted by disturbances in the optical signal (L) and
- an electrical equalizing device for the input signal (S) with a least two parallel-connected different variable electronic equalizers (E1, ..., Ei, ..., En) to which the electric input signal (S) is fed in each case, and with a control unit (3) for selecting the electrical output signal (S2) of the best equalizing electronic equalizer (E2) in each case and for controlling its equalization parameters (Ei,1, ..., Ei,m) in such a way that the signal quality (Q) of its equalized signal (S1-Sn) is optimized.

2. Optical receiver according to Claim 1, in which the control unit (3) contains a selection device (4), which selects the equalized output signal (Sᵢ) of the selected electronic equalizer (Eᵢ) for output as a data signal (D).

3. Optical receiver according to Claim 1, in which the equalized output signal (Sᵢ) of the selected electronic equalizer (Eᵢ) is fed to the control unit (3) for control of the related set of equalization parameters (E_{i,1},...,E_{i,m}).

4. Optical receiver according to Claim 1, in which a variable delay element (D₁,...,Dᵢ,...,Dₙ), whose delay (T₁,...,Tᵢ,...,Tₙ) is controlled by the control unit (3) in each case, is assigned to each electronic equalizer (E₁,...,Eᵢ,...,Eₙ).

5. Optical receiver according to Claim 4, in which the delay elements (D₁,...,Dᵢ,...,Dₙ) are preconnected to their respective electronic equalizers (E₁,...,Eᵢ,...,Eₙ).

6. Optical receiver according to one of Claims 1, in which the control unit (3) has a signal monitor (8) for determining the signal quality (Q) of the electrical output signal (Sᵢ).

7. Optical receiver according to one of Claims 1, in which the control unit (3) has a facility (9) for variation of the set (i) of equalization parameters (E_{i,1},...,E_{i,m}) discovered for an optimally equalized output signal (Sᵢ).

## Revendications

1. Récepteur optique (1) comprenant
- un dispositif de réception (2) pour convertir un signal optique (L) transmis par le biais d'une fibre optique en un signal d'entrée électrique (S) qui est déformé par des perturbations dans le signal optique (L) et
- un dispositif de correction électrique pour le signal d'entrée (S) comprenant au moins deux correcteurs électroniques variables (E1,..,Eᵢ,.., Eₙ) différents branchés en parallèle auxquels est à chaque fois acheminé le signal d'entrée électrique (S), et comprenant une unité de commande (3) pour sélectionner le signal de sortie électrique (S2) du correcteur électronique (E2) qui réalise à chaque fois la meilleure correction et pour commander ses paramètres de correction (E_{i,1},..,E_{i,m}) de telle sorte que la qualité du signal (Q) de son signal corrigé (S1-Sn) est optimisée.

2. Récepteur optique selon la revendication 1, avec lequel l'unité de commande (3) comprend un dispositif de sélection (4) qui sélectionne le signal de sortie corrigé (Sᵢ) du correcteur électronique sélectionné (Eᵢ) en vue de le délivrer sous la forme d'un signal de données (D).

3. Récepteur optique selon la revendication 1, avec lequel le signal de sortie corrigé (Sᵢ) du correcteur électronique sélectionné (Eᵢ) est acheminé à l'unité de commande (3) en vue de commander un jeu de paramètres de correction (E_{i,1},..,E_{i,m}).

4. Récepteur optique selon la revendication 1, avec lequel à chaque correcteur électronique (E1,..,Eᵢ,..,Eₙ) est associé un élément à retard variable (D1,.., Dᵢ,..,Dₙ) dont le retard (T1,..,Tᵢ,..,Tₙ) est à chaque fois commandé par l'unité de commande (3).

5. Récepteur optique selon la revendication 4, avec lequel les éléments à retard variable (D1,..,Dᵢ,..,Dₙ) sont à chaque fois branchés en amont de leurs correcteurs électroniques (E1,..,Eᵢ,..,Eₙ) respectifs.

6. Récepteur optique selon la revendication 1, avec lequel l'unité de commande (3) présente un contrôleur de signal (8) pour déterminer la qualité de signal (Q) du signal de sortie électrique (Sᵢ).

7. Récepteur optique selon la revendication 1, avec lequel l'unité de commande (3) présente un dispositif (9) de variation du jeu (i) de paramètres de correction (E_{i,1},..,E_{i,m}) trouvé pour un signal de sortie (Sᵢ) corrigé de manière optimale.
